# FASCICULE DE BREVET EUROPEEN

(11) **EP 0 936 728 B1**
(45) Date de publication et mention de la délivrance du brevet: **20.10.2010**
(21) Numéro de dépôt: 98410010.7
(22) Date de dépôt: 11.02.1998
(51) Int. Cl.: H02P 6/14

(54) **Commande d'un moteur sans collecteur susceptible de comporter des dissymétries**
Regelung eines Unsymmetrien enthaltenden bürstenlosen Motors
Control of a brushless motor containing asymmetries

(43) Date de publication de la demande: 18.08.1999
(73) Titulaire: STMicroelectronics S.A., 92120 Montrouge (FR)
(72) Inventeur: Maurice, Bruno, 13510 Eguilles (FR); Charreton, Jean-Marie, 13320 Bouc Bel Air (FR)
(74) Mandataire: de Beaumont, Michel

(56) Documents cités:
- EP-A- 0 466 673
- EP-A- 0 788 221
- EP-A- 0 801 463
- DE-A- 4 231 226

## Description

La présente invention concerne la gestion de moteurs sans collecteur et s'applique notamment au système décrit dans la demande de brevet européen EP-A-0801463 de la demanderesse dont les figures 1 à 4 sont reproduites ici.

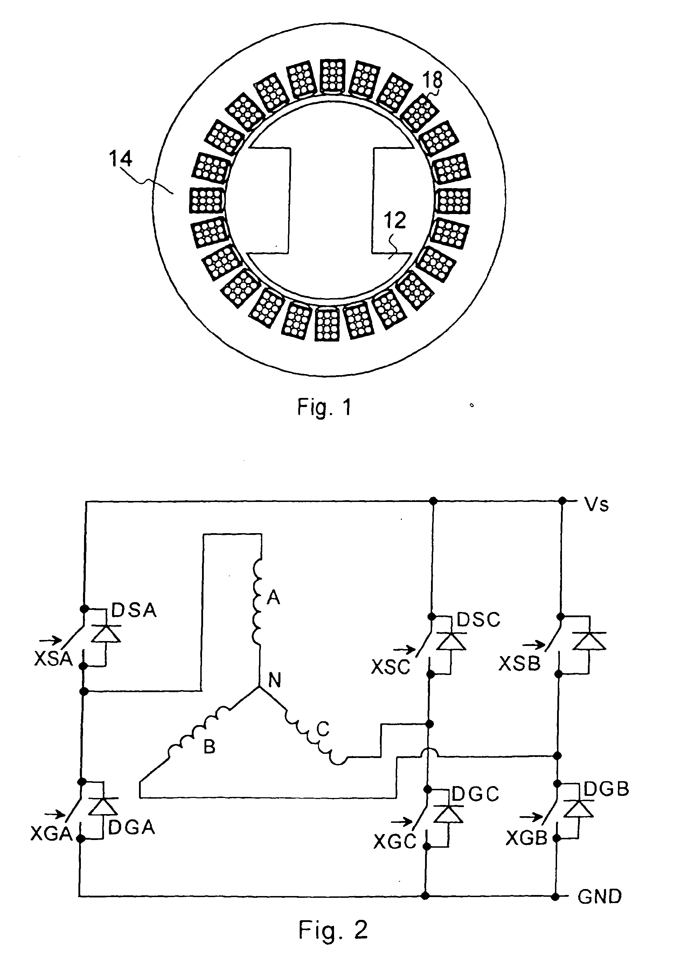

La figure 1 représente une vue en coupe d'un moteur typique à courant continu sans collecteur. Le moteur comprend un rotor à aimant permanent 12 et un stator 14 muni d'un certain nombre d'enroulements (A, B, C représentés en figure 2). Les enroulements sont disposés dans une pluralité de fentes 18. Dans le moteur représenté, le rotor 12 est logé dans le stator 14. De même le stator 14 pourrait être logé dans le rotor 12. Le rotor 12 est aimanté de façon permanente et tourne pour aligner son flux magnétique sur celui produit par les enroulements.

La figure 2 représente un schéma électrique du stator d'un tel moteur électrique et des circuits de commande d'alimentation utilisés. Souvent, ces moteurs comprennent trois phases A, B, C. Celles-ci peuvent être connectées en étoile avec un noeud commun N (comme dans la figure) ou en triangle. L'extrémité libre de chaque enroulement est reliée par une paire de commutateurs XSA, XGA ; XSB, XGB; XSC, XGC à l'alimentation Vs et à la masse, respectivement. Une diode polarisée en inverse DSA, DGA ; DSB, DGB ; DSC, DGC est placée en parallèle sur chacun des commutateurs. L'ouverture et la fermeture des commutateurs peuvent être commandées par un microcontrôleur.

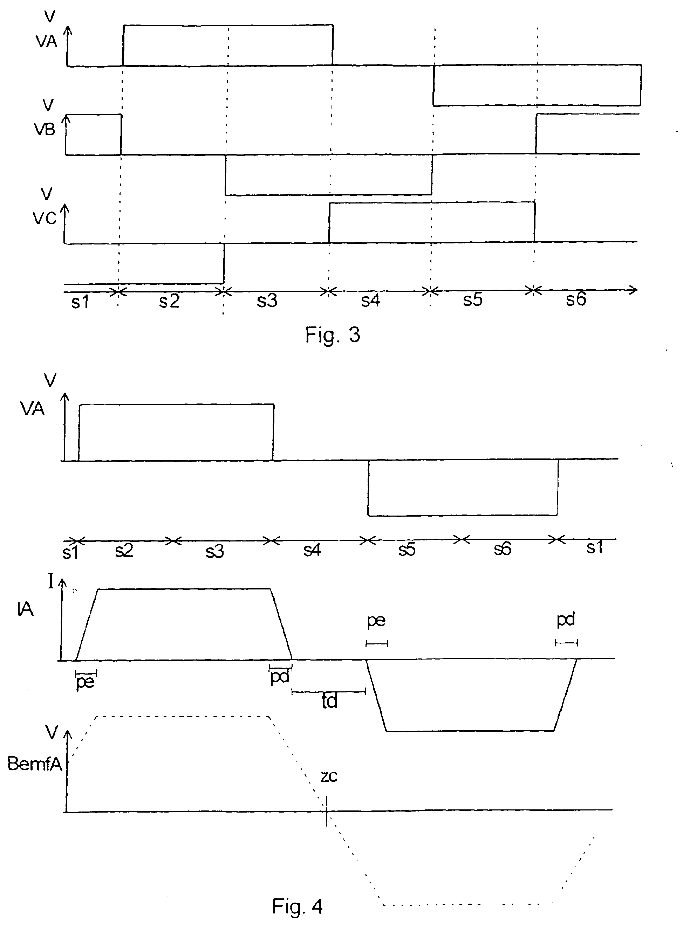

Comme cela est représenté en figure 3, les commutateurs sont commandés selon une séquence d'étapes. Le schéma représente la tension appliquée à chaque enroulement par rapport au noeud commun N. La figure représente le cas d'un moteur ayant des phases A, B et C, commandé selon six étapes s1, s2, s3, s4, s5, s6 correspondant chacune à une configuration particulière de flux magnétique dans le moteur. Lors de chacune de ces six étapes, l'une des phases A, B, C est coupée et les deux autres sont polarisées de façon opposée. Le rotor alignera son flux magnétique sur celui du stator et tournera donc de façon synchrone avec ce flux tandis qu'il tourne par suite de la commutation des six étapes.

Quand le rotor tourne, sa rotation induit une tension (force contre-électromotrice ou fcem) dans chacun des enroulements du moteur. Pour un moteur chargé, la fcem produite dans un enroulement est sensiblement en phase avec le courant circulant dans cet enroulement.

La figure 4 représente les six étapes de la tension VA appliquée à l'enroulement A, de la fcem (BemfA) produite dans l'enroulement A par le rotor en charge, et du courant IA dans l'enroulement A. Les périodes d'accroissement de courant et de réduction de courant sont respectivement appelées période d'alimentation (pe) et période de désalimentation (pd). Entre la période de désalimentation et la période d'alimentation est prévue une période de surveillance td pendant laquelle la fcem peut être surveillée.

La tension effectivement fournie à chacun des enroulements du moteur est commandée par modulation de largeur d'impulsion (PWM) de la tension d'alimentation continue. La fréquence du signal de modulation de largeur d'impulsion est habituellement élevée par rapport à la fréquence de rotation du moteur, par exemple d'environ 10 kHz. Les commutateurs sont commandés par un microcontrôleur en fonction du courant à fournir au moteur pour assurer la commutation entre les étapes s1 à s6 et pour assurer la commande PWM.

Pendant des périodes à bas niveau entre impulsions PWM, le moteur tourne en roue libre ; l'énergie cinétique du moteur tandis qu'il tourne est transformée en énergie électrique par sa rotation dans un champ maguétique. Le moteur ne ralentit pas pendant ces périodes car les valeurs élevées de la fréquence PWM, de l'inertie du moteur et de sa charge rendent ces changements indétectables.

Pour que le moteur fonctionne correctement, le flux existant dans le stator doit toujours être légèrement en avance par rapport au rotor pour continuer à tirer le moteur vers l'avant. Egalement, le flux dans le stator juste derrière le rotor est avantageusement d'une polarité propre à repousser le rotor pour aider à la rotation. Toutefois, on ne doit jamais perdre la synchronisation entre le mouvement du rotor et la rotation du flux car le rotor pourrait s'arrêter de tourner ou atteindre un mauvais rendement. En conséquence, pour optimiser le rendement du moteur, la commutation des enroulements d'une étape à l'autre doit être commandée en fonction de la position réelle du rotor. Pour cela, dans un mode de fonctionnement auto-commuté du moteur, on surveille la fcem induite dans les enroulements et plus particulièrement les points à passage à zéro de cette fcem pour déterminer la position du rotor à un instant donné.

La demande de brevet européen EP-A-0801463 prévoit un circuit de commande d'un moteur électrique sans collecteur dans lequel la transition d'une étape à la suivante est déterminée par un passage à zéro de la fcem dans un enroulement non alimenté pendant cette étape.

Plus particulièrement, cette demande de brevet européen EP-A-0801463 prévoit un procédé de commande d'un moteur sans collecteur ayant une pluralité d'enroulements dont chacun a une première extrémité connectée à un noeud commun et une seconde extrémité qui peut être connectée à des tensions d'alimentation, comprenant les étapes suivantes :
a) appliquer une tension d'alimentation supérieure à une seconde extrémité de chacun d'un premier sous-ensemble d'enroulements, appliquer une tension d'alimentation inférieure à une seconde extrémité de chacun d'un deuxième sous-ensemble d'enroulements, la seconde extrémité d'au moins un enroulement étant déconnectée des tensions d'alimentation ; l'application d'une tension d'alimentation à au moins l'un des premier et deuxième sous-ensembles étant périodiquement interrompue ;
b) détecter la présence d'un courant dans l'enroulement déconnecté puis détecter un instant de cessation du courant;
c) en commençant à l'instant de la cessation, surveiller la valeur d'une force contre-électromotrice induite dans l'enroulement déconnecté et détecter un point de passage à zéro de la fcem par rapport à la tension d'alimentation supérieure et/ou inférieure ;
d) décompter un retard prédéterminé à partir du point de passage à zéro détecté ; et
e) après expiration du retard prédéterminé, supprimer les tensions d'alimentation des secondes extrémités des premier et deuxième sous-ensembles d'enroulements et appliquer la tension d'alimentation supérieure à une seconde extrémité de chacun d'un troisième sous-ensemble d'enroulements ; appliquer la tension d'alimentation inférieure à une seconde extrémité de chacun d'un quatrième sous-ensemble d'enroulements ; la seconde extrémité d' au moins un enroulement restant non connectée aux tensions d'alimentation.

Selon la demande de brevet européen EP-A-0801463, le retard prédéterminé est une fraction prédéterminée de la durée prise pour réaliser un cycle précédent des étapes b) à e), cette fraction prédéterminée étant modifiable pendant le fonctionnement du moteur.

La demanderesse a noté que, dans le cas où le moteur présente des dissymétries au niveau des aimants ou est déformé magnétiquement, ou si la symétrie mécanique du stator n'est pas exactement la même que celle du rotor, les informations électriques de position correspondant au passage à zéro de la fcem ne sont pas régulières dans le temps bien que la vitesse du rotor soit régulière.

Dans le cas où l'on choisit pour chacune des étapes un retard T proportionnel à la durée de l'intervalle entre passages à zéro immédiatement précédent, il apparaît une dissymétrie aggravée.

La présente invention vise à pallier cet inconvénient.

Le document DE-A-42 31 226 décrit un système de commutation d'un moteur sans collecteur prévoyant une correction du retard de commutation.

Plus particulièrement, la présente invention prévoit un procédé de commande de type auto-commuté d'un moteur sans collecteur ayant une pluralité d'enroulements commutés selon un cycle d'étapes déterminé, dans lequel chaque transition entre étapes est déterminée à un instant qui suit un passage à zéro de la force contre-électromotrice d'un retard déterminé. Ledit retard est choisi sélectivement selon l'étape concernée en fonction de la durée de l'un déterminé des intervalles entre passages à zéro précédents, le procédé comprenant les étapes suivantes :
déterminer pour un moteur tournant à vitesse constante la durée des intervalles entre passages à zéro de la fcem,
faire suivre l'intervalle le plus long d'un retard proportionnel à la durée du dernier intervalle le plus court,
faire suivre l'intervalle le plus court d'un retard proportionnel à la durée du dernier intervalle le plus long, et
faire suivre les intervalles de durée moyenne d'un retard proportionnel à la durée du dernier intervalle de durée moyenne.

Selon un mode de réalisation de la présente invention, ce procédé consiste à faire suivre chaque détection de passage à zéro de la fcem d'un retard proportionnel à la durée d'un intervalle décalé de l'étape en cours d'un nombre d'étapes déterminé.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente une vue en coupe d'un moteur sans collecteur connu ;
La figure 2 représente un circuit connu de commande du moteur de la figure 1;
La figure 3 représente des tensions appliquées à des éléments du circuit de la figure 2;
la figure 4 représente des courants et des tensions dans les enroulements d'un moteur;
les figures 5A et 5B représentent, lors de la rotation d'un moteur, respectivement, des instants de détection de passage à zéro et des instants de commutation des enroulements d'un moteur, selon l'état de la technique ; et
les figures 6A et 6B correspondent respectivement aux figures 5A et 5B dans le cas d'un fonctionnement selon la présente invention.

Bien que cela ne soit pas décrit en détail, les signaux de commande du fonctionnement des divers éléments du circuit selon l'invention sont produits par un microcontrôleur hôte, par exemple un microcontrôleur de la famille ST72xx ou ST9xxx fabriqué par la société SGS-Thomson.

Quand un point de passage à zéro de la fcem est détecté, un retard est imposé à partir de ce point jusqu'à la transition d'étape suivante. Ce retard variable est sélectionné par le microcontrôleur hôte en fonction de la vitesse instantanée du moteur pour obtenir un rendement maximum et un couple optimal du moteur. La mesure de fcem est réalisée pendant les périodes de coupure de la modulation PWM.

Ainsi, dans un mode auto-commuté, la détection du point de passage à zéro de la fcem dans un enroulement donné est utilisée pour déclencher le point de mise en route du courant dans ce même enroulement. Cette commande est appliquée avec un retard T/x après le point de passage à zéro, T étant la durée de l'étape, et x étant une constante fixée pour obtenir le meilleur fonctionnement possible du moteur. La constante x est ajustée en temps réel pour tenir compte des variations de la charge mécanique du moteur, de l'accélération requise, de la stabilité et du rendement requis.

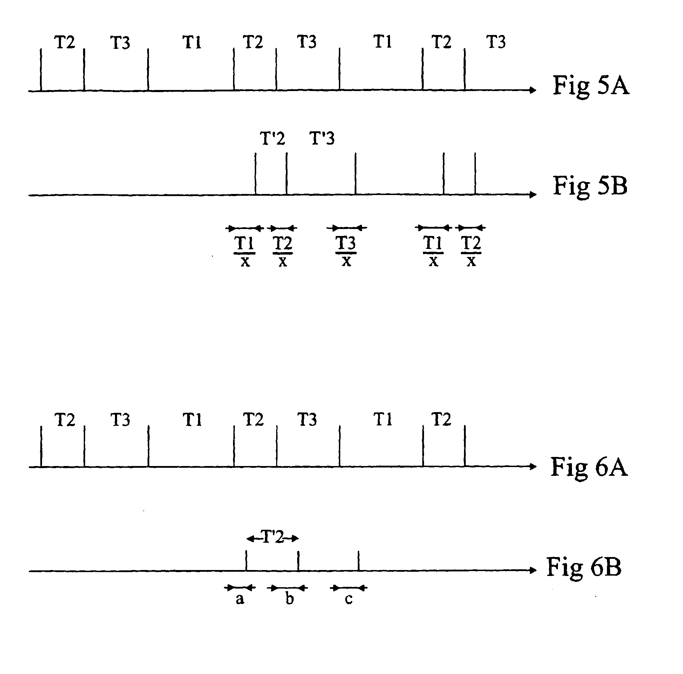

Les figures 5A et 5B illustrent une succession d'étapes de fonctionnement d'un moteur dans le cas où celui-ci présente des dissymétries mécaniques. En figure 5A, on a représenté les étapes successives de fonctionnement, telles que détectées par les passages à zéro successifs de la fcem. On suppose que le moteur présente une dissymétrie mécanique d'ordre trois. Il apparaît alors des intervalles inégaux T1, T2, T3 entre des passages à zéro successifs de la fcem, alors que, si le moteur fonctionne à vitesse constante et que tout est convenablement réglé, ces trois intervalles T1, T2, T3 devraient être identiques. On a représenté l' intervalle T3 comme ayant une valeur normale et l'intervalle T1 nettement plus long que l'intervalle T2. Dans le cas classique, on part des passages à zéro de la fcem, correspondant à la fin de chacune des intervalles T1, T2, T3, et on déclenche une transition du mode de commutation des divers enroulements du moteur après un retard T/x, où T correspond à la durée de l' intervalle immédiatement précédent. Alors, comme le représente la figure 5B, on voit que l'intervalle le plus long T1 est suivi d'un retard long T1/x, tandis que la fin de l'intervalle le plus court T2 est suivi d'un retard court T2/x. Ainsi, lors de cycles de fonctionnement suivant, la phase T'2 sera encore plus courte que la phase T2 précédente tandis que la phase T'3 correspondant à T3 sera allongée. En conséquence l'existence d'une dissymétrie mécanique dans la structure du moteur entraîne une dissymétrie aggravée de la commutation des étapes et il y a accroissement des défauts.

Il en résulte notamment qu'après un intervalle court le temps mort nécessaire à la détection de la fcem sera fortement réduit ce qui limite la vitesse maximum possible du moteur. Il en résultera également que la rotation du flux statorique ne sera pas régulière bien que le rotor tourne régulièrement. Ceci peut entraîner des vibrations, des à coups de couple, du bruit et une baisse de rendement.

Ainsi, la présente invention vise à tenir compte des irrégularités éventuelles d'un moteur, c'est-à-dire des irrégularités des passages à zéro de la fcem pour un moteur tournant à vitesse constante de façon à compenser ces erreurs mécaniques par un déclenchement adapté des transitions des divers commutateurs des enroulements du moteur.

Comme le représentent schématiquement les figures 6A et 6B, on visera à déclencher les commutations de moteur avec un retard court a inmédiatement après un intervalle long T1 et avec un retard plus long b immédiatement après un intervalle court T2. Ainsi, la durée T'2 entre deux transitions correspondant à un intervalle court sera rallongée par rapport à la durée T2 et non pas minorée comme c'était le cas dans les figures 5A à 5B.

L'homme de l'art saura trouver divers moyens pour atteindre ces résultats, ces divers moyens pouvant être pris en compte par le microcontrôleur de commande au moyen d'un programme approprié. Par exemple, on fait tourner une première fois le moteur à vitesse constante et on vérifie la répartition des intervalles T1, T2, T3. Dans l'exemple particulier de la figure 6A, on pourra calculer la durée a comme correspondant à T2/x, la durée b comme correspondant à T1/x et la durée c comme correspondant à T3/x. On comprendra bien entendu, comme cela a été exposé précédemment, que les durées T1, T2, T3 varient selon la vitesse de rotation du moteur. On sélectionnera donc dans le cas particulier illustré en figures 6A et 6B pour la durée a une durée (T2/x) correspondant à un intervalle deux fois antérieur à l'étape qui vient de se terminer (T1), pour la durée b une durée (T1/x) correspondant à un intervalle immédiatement antérieur à l'étape qui vient de se terminer (T2) et pour la durée c une durée (T3/x) correspondant à l'intervalle qui vient de se terminer (T3) . On pourra aussi dans d'autres cas, par exemple mais non exclusivement en cas de dissymétrie d'ordre deux, choisir systématiquement d'utiliser comme base de calcul la durée d'un intervalle précédant d'une étape l'étape qui vient de se terminer. Toute autre combinaison pourra être choisie selon le type de dissymétrie et la sophistication désirée du procédé de correction.

Grâce à l'invention, la dissymétrie dans la commutation des étapes est atténuée, la vitesse maximum du moteur est augmentée, la vitesse de rotation du flux rotorique devient régulière, c'est-à-dire que l'ondulation de couple est réduite et donc le bruit tandis que le rendement est augmenté. De plus, le fonctionnement électrique et les performances du moteur sont moins influencés par les défauts mécaniques ou magnétiques et les tolérances dimensionnelles utilisées lors de la construction du moteur.

L'exemple décrit l'a été pour un moteur connecté en étoile. Le même processus peut être utilisé pour commander un moteur connecté en triangle. Bien que décrits en relation avec un moteur à trois enroulements, le procédé selon l'invention s'adapte simplement à des moteurs à plus ou moins d'enroulements.

Bien que la présente invention ait été décrite dans le cas particulier d'un perfectionnement à la demande de brevet européen EP-A-0801463, on notera qu'elle s'applique de façon générale à tout système de commande d'un moteur sans collecteur auto-commuté dans lequel une transition entre étapes d'excitation des enroulements du moteur est déterminée en rajoutant un certain retard à l'instant de passage à zéro de la fcem dans un enroulement non alimenté du moteur.

## Revendications

1. Procédé de commande de type auto-commuté d'un moteur sans collecteur ayant une pluralité d'enroulements (A, B, C) commutés selon un cycle d'étapes déterminé, dans lequel chaque transition entre étapes est déterminée à un instant qui suit un passage à zéro de la force contre-électromotrice d'un retard déterminé, ledit retard étant choisi sélectivement selon l'étape concernée en fonction de la durée de l'un déterminé des intervalles entre passages à zéro précédents, **caractérisé en ce qu'**il comprend les étapes suivantes :
déterminer pour un moteur tournant à vitesse constante la durée des intervalles entre passages à zéro de la fcem,
faire suivre l'intervalle le plus long d'un retard proportionnel à la durée du dernier intervalle le plus court,
faire suivre l'intervalle le plus court d'un retard proportionnel à la durée du dernier intervalle le plus long, et
faire suivre les intervalles de durée moyenne d'un retard proportionnel à la durée du dernier intervalle de durée moyenne.

2. Procédé selon la revendication 1, **caractérisé en ce qu'**il consiste à faire suivre chaque détection de passage à zéro de la fcem d'un retard proportionnel à la durée d'un intervalle décalé de l'étape en cours d'un nombre d'étapes déterminé.

## Claims

1. A self-commutated type method of control of a brushless motor having a plurality of windings (A, B, C) switched according to a determined cycle of steps, in which each transition between steps is determined at a time following a zero crossing of the back emf by a determined delay, said delay being chosen selectively according to the step involved, depending on the duration of a determined one of the preceding intervals between zero crossings, **characterized in that** it includes the following steps:
determining for a motor rotating at a constant speed the duration of the intervals between zero crossings of the back emf,
having the longest interval followed by a delay proportional to the duration of the last shortest interval,
having the shortest interval followed by a delay proportional to the duration of the last longest interval, and
having the intervals of medium duration followed by a delay proportional to the duration of the last interval of medium duration.

2. The method of claim 1, **characterized in that** the method consists of having each detection of a zero crossing of the back emf followed by a delay proportional to the duration of a interval shifted from the step under way by a determined number of steps.

## Patentansprüche

1. Verfahren zur Steuerung eines bürstenlosen Motors mit Selbst-Kommutation, der mehrere Wicklungen (A, B, C) aufweist, welche gemäß einem vorgegebenen Schrittzyklus geschaltet werden, wobei jeder Übergang zwischen Schritten zu einem Zeitpunkt bestimmt wird, der einem Nulldurchgang der Gegen-EMK um eine vorgegebenen Verzögerung folgt, wobei die Verzögerung gemäß dem in Rede stehenden Schritt abhängig von der Dauer eines bestimmten der vorangehenden Intervalle zwischen Nulldurchgängen selektiv gewählt wird, **dadurch gekennzeichnet, dass**
die Dauer der Intervalle zwischen Nulldurchgängen der Gegen-EMK für eine Motordrehung mit konstanter Drehzahl bestimmt wird;
dem längsten Intervall eine Verzögerung folgt, die proportional zur Dauer des letzten kürzesten Intervalls ist,
dem kürzesten Intervall eine Verzögerung folgt, die proportional zu der Dauer des letzten längsten Intervalls ist, und
den Intervallen mittlerer Dauer eine Verzögerung folgt, die proportional der Dauer des letzten Intervalls mittlerer Dauer ist.

2. Verfahren nach Anspruch 1, **dadurch gekennzeichnet, dass** jeder Erfassung eines Nulldurchgangs der Gegen-EMK eine Verzögerung folgt, die proportional zu der Dauer eines Intervalls ist, welches gegenüber dem laufenden Schritt um eine bestimmte Anzahl von Schritten verschoben ist.
